# EUROPÄISCHE PATENTSCHRIFT

(11) **EP 0 885 553 B1**
(45) Veröffentlichungstag und Bekanntmachung des Hinweises auf die Patenterteilung: **16.08.2001**
(21) Anmeldenummer: 98108841.2
(22) Anmeldetag: 15.05.1998
(51) Int. Cl.: A01B 33/10

(54) **Zinken für ein Bodenbearbeitungsgerät**
Tine for soil working implement
Dent pour appareil de travail du sol

(30) Priorität: 17.06.1997 DE 29710516 U
(43) Veröffentlichungstag der Anmeldung: 23.12.1998
(73) Patentinhaber: RDZ DUTZI GmbH, 76698 Ubstadt-Weiher (DE)
(72) Erfinder: Dutzi, Friedhelm, 76698 Ubstadt-Weiher/Zeutern (DE)
(74) Vertreter: Petersen, Frank, Dipl.-Ing.

(56) Entgegenhaltungen:
- DE-A- 2 824 156
- DE-U- 9 410 781
- FR-A- 2 206 040
- FR-A- 2 742 021
- GB-A- 689 985

## Beschreibung

Die Erfindung betrifft einen Zinken für einen Zinkenrotor eines Bodenbearbeitungsgerätes, der eine sich vom horizontal liegenden Rotor im wesentlichen radial wegerstreckende Schneide zum Aufbrechen und Zerkleinern des Bodens aufweist, wobei die Schneide ein dünneres Schneidenblatt und einen in Rotationsrichtung dahinterliegenden dickeren Schneidenrücken aufweist.

Ein solcher Zinken ist beispielsweise bekannt aus dem deutschen Gebrauchsmuster Nr. 295 06 469. Dieser Zinken wird eingesetzt an einem Bodenbearbeitungsgerät, das hinter einem Ackerschlepper angekuppelt ist und auf dem Prinzip der nicht wendenden Bodenbearbeitung beruht. An dem vorderen Ende dieses Bodenbearbeitungsgerätes findet man Lockerungsschare, die über die Arbeitsbreite des Arbeitsgerätes den Boden aufbrechen, ohne ihn zu wenden. Hinter diesen Scharen sitzt dann der Zinkenrotor, mit dem Ernterückstände und Gründüngung in den oberen Bodenhorizont eingearbeitet werden und der dabei für den für eine Bandsaat notwendigen Erdstrom sorgt. Eine nachgeschaltete Packerwalze führt dann das Bodenbearbeitungsgerät in einer eingestellten Tiefe und sorgt gleichzeitig für die nötige Rückverfestigung des Bodens.

Bei den bisher bekannten Bodenbearbeitungsgeräten ist der Zinkenrotor als eine horizontal liegende Welle ausgebildet, auf dem mit seitlichem Abstand zueinander die Zinken sitzen. Und zwar weisen die Zinken einen Flanschabschnitt auf, mit dem sie an der Welle befestigt sind und eine Schneide, mit der der Boden aufgebrochen und zerkleinert wird. Die Schneide verschleißt dabei relativ stark und zwar insbesondere an der bezogen auf den Zinkenrotor radial außen liegenden Spitze.

Um dieses Problem zu umgehen, wird in der DE-GBM 295 06 469 vorgeschlagen, die Spitze des Zinkens durch einen Hartmetalleinsatz zu panzern.

Hierdurch wird aber nur die Spitze vor vorzeitigem Verschleiß geschützt. Andere Bereiche des Zinkens führen aufgrund der abrasiven Belastung weiterhin zu einem vorzeitigen Ausfall des Zinkens.

Von daher liegt der vorliegenden Erfindung die Aufgabe zugrunde, einen Zinken für einen Zinkenrotor derart weiterzubilden, daß er eine hohe Standzeit hat, und dabei gleichzeitig kostengünstig herstellbar ist.

Diese Aufgabe wird erfindungsgemäß dadurch gelöst, daß der Zinken in dem Bereich, der sich an die zuerst in den Boden eintauchende Spitze anschließt, mit einer Schneidenverstärkung versehen ist, die dicker ist als das Schneidenblatt.

Die Erfindung hat den Vorteil, daß ein entsprechender Zinken mehr Material aufweist, das verschlissen werden kann. Somit erhält man einen Zinken, der eine hohe Standzeit hat, ohne daß an ihm separat Bohrungen oder ähnliches zur Anbringung einer Hartmetallspitze eingebracht werden müssen.

Bei einer derart in der Standzeit verlängerten Spitze des Arbeitszinkens erhält der Verschleiß entlang der Vorderkante des Schneidenblattes eine stärkere Bedeutung. Um zu verhindern, daß ein Zinken also wegen übermäßigem Verschleiß im der Spitze abgewandten Bereicn der Schneide nicht mehr zu gebrauchen ist, wird vorgeschlagen, die Schneidenverstärkung entlang des Vorderrandes des Schneidenblattes zu verlängern.

Für diese Verlängerung hat sich in Versuchen bewährt, sie wulstartig zu verdicken. Damit bleibt der dahinterliegende Bereich des Schneidenblattes in der bisherigen Stärke. Diese geringere Stärke ist vorteilhaft bezüglich der Elastizität des dynamisch beanspruchten Zinkens.

Bezüglich der Form der wulstartigen Verdickung hat sich dabei insbesondere ein im wesentlichen kreisförmiger Querschnitt als günstig herausgestellt.

Parallel dazu hat sich für den an der Zinkenspitze anschließenden Abschnitt des Vorderrandes eine im wesentlichen dreieckige Querschnittsform als günstig erwiesen, bei der der Rand eine spitze Vorderseite und eine breite Basisfläche hat.

Diese spitze Vorderseite hat vorzugsweise einen Winkel von etwa 60°.

Grundsätzlich kann auch der Vorderrand des erfindungsgemäßen Zinkens zumindestens abschnittsweise aus Hartmetall bestehen. Insbesondere der oben erwähnte Abschnitt des Vorderrandes mit dreieckigen Querschnitt wird hierfür bevorzugt.

Dabei kann der aus Hartmetall bestehende Abschnitt auch die Spitze des Zinkens mitumfassen, so daß diese besonders beanspruchte Stelle mit vor Verschleiß zu schützen ist.

Bei einer bevorzugten Ausführungsform reihen sich am Vorderrand der Schneide dann die Zinkenspitze und die dreieckige Vorderkante aneinander mit der wulstartigen Verlängerung, wobei dann insbesondere die Zinkenspitze und die dreieckige Vorderkante aus Hartmetall gefertigt sind.

Weitere Vorteile und Merkmale der Erfindung ergeben sich aus der nachfolgenden Beschreibung eines Ausführungsbeispiels; dabei zeigt
- Figur 1: die Seitenansicht eines erfindungsgemäßen Zinkens;
- Figur 2: die Vorderansicht eines erfindungsgemäßen Zinkens;
- Figur 3: Schnitt durch einen erfindungsgemäßen Zinken entlang der Linie III-III in Figur 2;
- Figur 4: Schnitt durch einen erfindungsgemäßen Zinken entlang der Linie IV-IV in Figur 2.

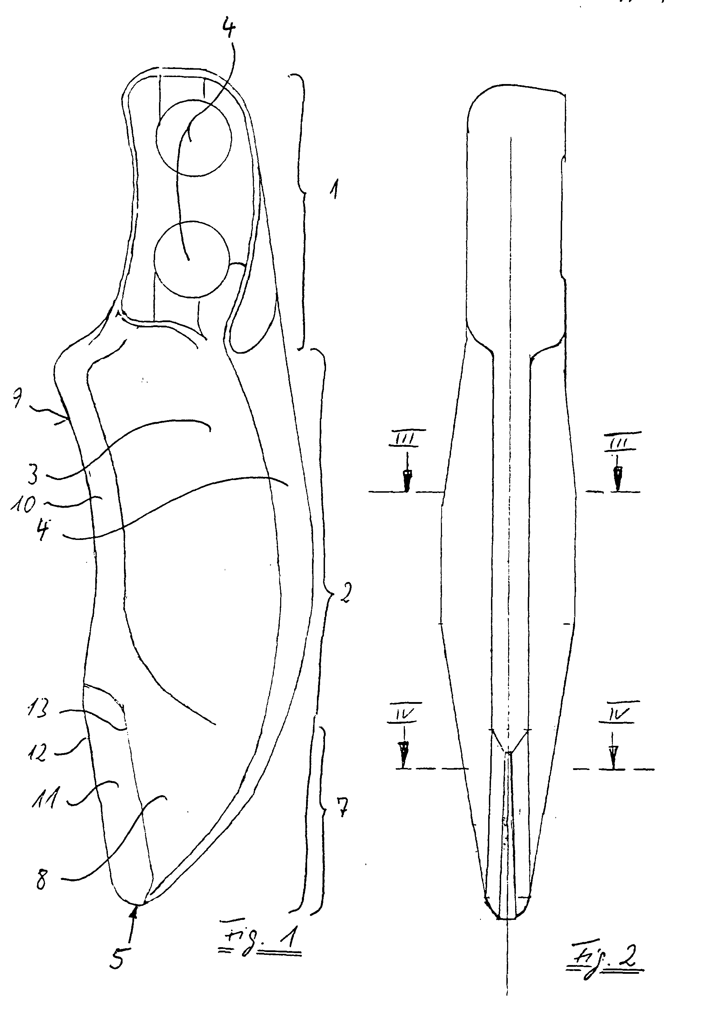

Figur 1 zeigt die Seitenansicht eines erfindungsgemäßen Zinkens. Dieser weist einen Flanschabschnitt 1 und eine Schneide 2 auf. Die Schneide 2 setzt sich im wesentlichen zusammen aus einem dünnen Schneidenblatt 3 und einem dahinterliegenden Schneidenrücken 4, der dicker ist als das Schneidenblatt 3.

Der Zinken wird mit dem Flanschabschnitt 1 über Bohrungen 4 an einer entsprechenden Halterung eines Zinkenrotors auswechselbar festgeschraubt.

Im Betrieb des Bodenbearbeitungsgerätes, in das der Zinkenrotor integriert ist, rotiert dieser, wobei die Schneide 2 des Zinkens eine Flugbahn beschreibt, bei der sie in den mit dem Bodenbearbeitungsgerät zu bearbeitenden Boden eintaucht und dabei Ernterückstände, Gründüngung etc. in den Boden einarbeitet. Dabei verschleißt der Zinken insbesondere an der den Außenbogen der Flugbahn beschreibenden Spitze 5 der Schneide 2. Durch diesen Verschleiß wird der Zinken kürzer und da die Länge des Zinkens entscheidend ist für die Arbeitsgüte, wird somit durch diesen Verschleiß die Standzeit des Zinkens bestimmt.

Um diese Standszeit zu verlängern, ist deshalb der sich an die Spitze 5 der Schneide 2 anschließende Bereich 7 mit einer Schneidenverstärkung 8 versehen. Diese Verstärkung wird im wesentlichen dadurch erreicht, daß der sich an die Spitze 5 anschließende Bereich 7 dicker ausgeführt wird als das Schneidenblatt 3. Die Schneidenverstärkung 8 ist dabei entlang des Vorderrandes 9 des Schneidenblattes 9 verlängert und bildet dort eine wulstartige Verdickung 10.

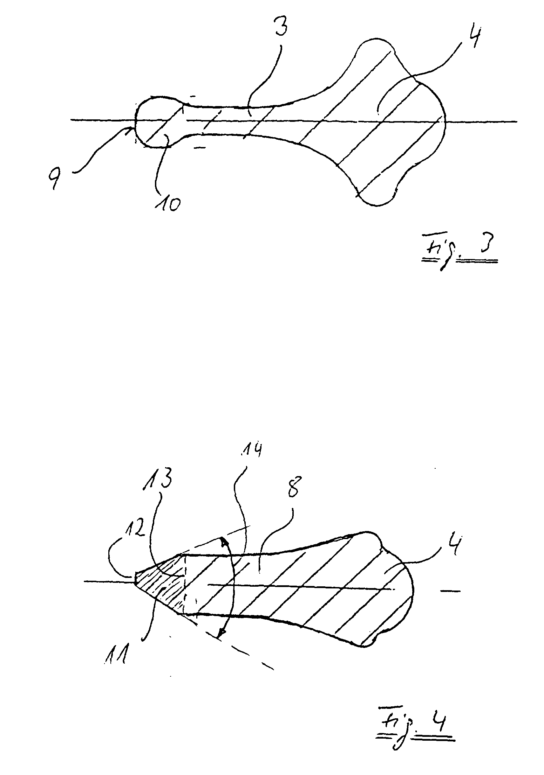

Wie aus der Figur 3 zu entnehmen ist, hat dabei die Verdickung 10 einen im wesentlichen kreisförmigen Querschnitt, der auch breiter ist als das hinter der Verdickung liegende Schneidenblatt 3.

Im übrigen erkennt man in der Figur 1, daß der sich an die Zinkenspitze 5 anschließende Abschnitt 11 des Vorderrandes 9 einen im wesentlichen dreieckigen Querschnitt aufweist mit einer spitzen Vorderseite 12 und einer breiteren Basisfläche 13. Der Winkel 14, mit dem sich dieser Abschnitt dabei öffnet, liegt bei etwa 60°.

Im hier dargestellten Beispiel ist im übrigen gerade dieser Abschnitt des Schneidenvorderrandes auch aus Hartmetall gefertigt, wodurch in diesem Bereich eine besonders hohe Verschleißfestigkeit zu erreichen ist. Dabei ist die Basisfläche 13 des Hartmetalleinsatzes so breit wie die Schneidenverstärkung 8 in diesem Bereich, so daß die Schneidenverstärkung also eine Unterfütterung für die Basisfläche des Hartmetallabschnittes aufweist. Dabei wird einem Ausbrechen des spröden Hartmetallabschnittes entgegengewirkt.

Grundsätzlich ist zu bemerken, daß aufgrund der dicken und dünnen Abschnitte der Schneide diese sich bei der stoßartigen dynamischen Belastung sehr günstig verhält, wobei die dickeren Abschnitte deutlich zum Verschleißschutz beitragen.

## Patentansprüche

1. Zinken für einen Zinkenrotor eines Bodenbearbeitungsgerätes, der eine Schneide (2) zum Aufbrechen und Zerkleinern des Bodens aufweist, wobei die Schneide (2) ein dünneres Schneidenbiatt (3) und einen dahinterliegenden dickeren Schneidenrücken (4) aufweist,
dadurch gekennzeichnet,
daß der Zinken in dem Bereich (7), der sich an die zuerst in den Boden eintauchende Spitze (5) anschließt, mit einer Schneidenverstärkung (8) versehen ist, die dicker ist als das Schneidenblatt (3).

2. Zinken gemäß Anspruch 1,
dadurch gekennzeichnet,
daß die Schneidenverstärkung (8) entlang des Vorderrandes (9) des Schneidenblattes (3) verlängert ist.

3. Zinken gemäß Anspruch 1,
dadurch gekennzeichnet,
daß der sich an die Zinkenspitze (5) anschließende Abschnitt (11) des Vorderrandes der Schneide (2) einen im wesentlichen dreieckigen Querschnitt aufweist mit einer spitzen Vorderseite (12) und einer breiteren Basisfläche (13).

4. Zinken gemäß Anspruch 3,
dadurch gekennzeichnet,
daß der Winkel (14) der spitzen Vorderseite bei etwa 60° liegt.

5. Zinken gemäß Anspruch 1,
dadurch gekennzeichnet,
daß zumindest ein Abschnitt (11) des Schneidenvorderrandes (9) aus Hartmetall besteht.

6. Zinken gemäß Anspruch 5,
dadurch gekennzeichnet,
daß der Abschnitt (11) die Spitze (5) des Zinkens mitumfaßt.

7. Zinken gemäß Anspruch 5,
dadurch gekennzeichnet,
daß die Schneidenverstärkung (8) eine Unterfütterung für die Basisfläche (13) des Hartmetallabschnittes (11) aufweist.

8. Zinken gemäß Anspruch 1,
dadurch gekennzeichnet,
daß die Schneidenverstärkung (8) zumindest abschnittsweise eine wulstartige Verdickung (10) des Schneidenvorderrandes (9) ist.

9. Zinken gemäß Anspruch 8,
dadurch gekennzeichnet,
daß die Verdickung (10) einen im wesentlichen kreisförmigen Querschnitt aufweist.

10. Zinken gemäß einem oder mehreren der vorhergehenden Ansprüche,
dadurch gekennzeichnet,
daß am Vorderrand der Schneide (9) die Abschnitte Zinkenspitze (5), dreieckige Vorderkante (12) und wulstartige Verlängerung (10) aneinander anschließen.

## Claims

1. Tine for a tined rotor of a soil working implement, which has a cutter (2) for breaking up and comminuting the soil, the cutter (2) having a relatively thin cutter blade (3) and, arranged behind it, a relatively thick cutter back (4),
characterised in that
the tine is provided with a cutter reinforcement (8) in the region (7) adjoining the tip (5) which enters the soil first, which cutter reinforcement (8) is thicker than the cutter blade (3).

2. Tine according to claim 1,
characterised in that
the cutter reinforcement (8) is extended along the forward edge (9) of the cutter blade (3).

3. Tine according to claim 1,
characterised in that
the portion (11) of the forward edge of the cutter (2) that adjoins the tine tip (5) has a substantially triangular cross-section with a pointed forward side (12) and a relatively broad base surface (13).

4. Tine according to claim 3,
characterised in that
the angle (14) of the pointed forward side is about 60°.

5. Tine according to claim 1,
characterised in that
at least a portion (11) of the cutter forward edge (9) consists of metal carbide.

6. Tine according to claim 5,
characterised in that
the portion (11) includes the tip (5) of the tine.

7. Tine according to claim 5,
characterised in that
the cutter reinforcement (8) has an interfacing for the base surface (13) of the metal carbide portion (11).

8. Tine according to claim 1,
characterised in that
the cutter reinforcement (8) is, at least in portions, a bulge-like thickening (10) of the cutter forward edge (9).

9. Tine according to claim 8,
characterised in that
the thickening (10) has a substantially circular cross-section.

10. Tine according to any one or more of the preceding claims,
characterised in that
at the forward edge of the cutter (9), the portions tine tip (5), triangular forward edge (12) and bulge-like extension (10) adjoin one another.

## Revendications

1. Dent pour un rotor à dents d'un appareil de travail du sol qui présente un tranchant (2) pour ouvrir et briser le sol, le tranchant (2) présentant une lame (3) plus mince et un dos (4) plus épais situé derrière la lame, **caractérisée en ce que** la dent est munie, dans la partie (7) adjacente à la pointe (5) s'enfonçant d'abord dans le sol, d'un renforcement du tranchant (8) plus épais que la lame (3).

2. Dent selon la revendication 1, **caractérisée en ce que** le renforcement du tranchant (8) est prolongé le long du bord avant (9) de la lame (3).

3. Dent selon la revendication 1, **caractérisée en ce que** la section (11) du bord avant du tranchant (2) adjacente à la pointe de dent (5) présente une section essentiellement triangulaire avec un côté avant (12) pointu et une surface de base (13) plus large.

4. Dent selon la revendication 3, **caractérisée en ce que** l'angle (14) du côté avant pointu est d'environ 60°.

5. Dent selon la revendication 1, **caractérisée en ce qu'au** moins une section (11) du bord avant du tranchant (9) est composée de métal dur.

6. Dent selon la revendication 5, **caractérisée en ce que** la section (11) comprend la pointe (5) de la dent.

7. Dent selon la revendication 5, **caractérisée en ce que** le renforcement du tranchant (8) présente une garniture intérieure pour la surface de base (13) de la section en métal dur (11).

8. Dent. selon la revendication 1, **caractérisée en ce que** le renforcement du tranchant (8) est, au moins en partie, un épaississement (10) en forme de bourrelet du bord avant du tranchant (9).

9. Dent selon la revendication 8, **caractérisée en ce que** l'épaississement (10) présente une section essentiellement circulaire.

10. Dent selon l'une ou plusieurs des revendications précédentes, **caractérisée en ce que,** sur le bord avant du tranchant (9), les sections, pointe de dent (5), arête avant (12) triangulaire et prolongement (10) en forme de bourrelet, sont adjacentes les unes par rapport aux autres.
